# EUROPEAN PATENT SPECIFICATION

(11) **EP 3 415 401 B1**
(45) Date of publication and mention of the grant of the patent: **07.10.2020**
(21) Application number: 18177840.8
(22) Date of filing: 14.06.2018
(51) Int. Cl.: B62B 3/06, B62B 5/00, B62B 5/02

(54) **A TRACKED PALLET JACK FOR HANDLING A LOAD ON A WORKING AREA**
PALETTENHUBWAGEN MIT RAUPEN ZUR HANDHABUNG EINER LAST AUF EINER ARBEITSFLÄCHE
TRANSPALETTE CHENILLÉ POUR MANIPULER UNE CHARGE SUR UNE SURFACE DE TRAVAIL

(30) Priority: 14.06.2017 IT 201700065996
(43) Date of publication of application: 19.12.2018
(73) Proprietor: E.H.W. GmbH, 9020 Klagenfurt am Wörthersee (AT)
(72) Inventor: Dall'Osto, Luca, 9020 Klagenfurt am Wörthersee (AT)
(74) Representative: Autuori, Angelo

(56) References cited:
- WO-A1-2010/008326
- CN-U- 201 834 082
- DE-U1- 29 911 310
- US-A- 2 986 225

## Description

### Field of the invention

The present invention is generally applicable to the technical field of pallet jacks and it particularly relates to a tracked pallet jack to handle a load on a working area. Moreover, the invention relates to a system to handle a load comprising such a pallet jack.

### Background of the invention

Various types of self-propelled pallet jacks are known. In particular, known pallet jacks have various drawbacks that prevent or make particularly difficult the use thereof in irregular working areas, with unstable ground, having small gradients and / or in sloping working areas.

In order to try to overcome such drawbacks, tracked pallet jacks have been provided, shown for example in documents DE29911310 and US2986225.

However, such known pallet jacks are particularly bulky, difficult to handle and limited in the possibility of handling.

Moreover, such known pallet jacks are difficult to be used in sloping working areas and / or in presence of obstacles to overcome.

### Summary of the invention

Object of the present invention is to at least partially overcome the above mentioned drawbacks, by providing a pallet jack with a high efficiency and relative low cost.

Another object of the present invention is to provide a pallet jack that may be used in sloping working areas.

Another object of the present invention is to provide a pallet jack that may be used in unstable grounds.

Another object of the present invention is to provide a pallet jack that may be used in working areas that have obstacles.

Another object of the present invention is to provide a particularly safe pallet jack.

Another object of the present invention is to provide a pallet jack that is simple to handle.

Another object of the present invention is to provide a low-bulky pallet jack.

Another object of the present invention is to provide a pallet jack that may be handled in any direction.

Such objects, as well as others that will be clearer hereinafter, are fulfilled by a pallet jack and a system respectively according to claim 1 and 12.

The invention is defined in the appended claims.

### Brief description of the drawings

Further features and advantages of the invention will become clearer by reading the detailed description of some preferred but not exclusive embodiments of the invention, shown by way of not limitative example with the help of the annexed drawings, wherein:

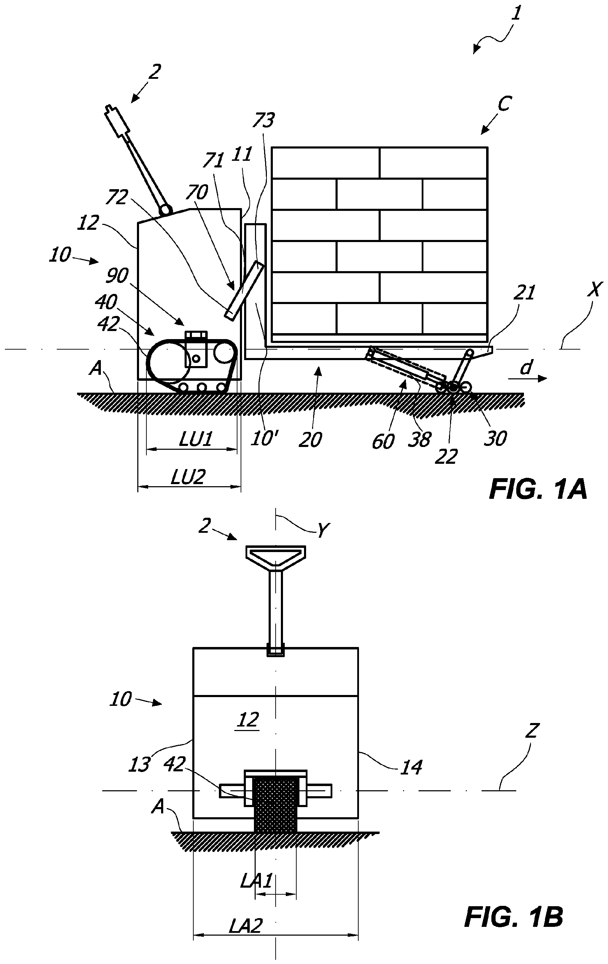

**FIGs. 1A** and **1B** are respectively side and rear schematic views of a preferred but not exclusive embodiment of a tracked pallet jack **1**;

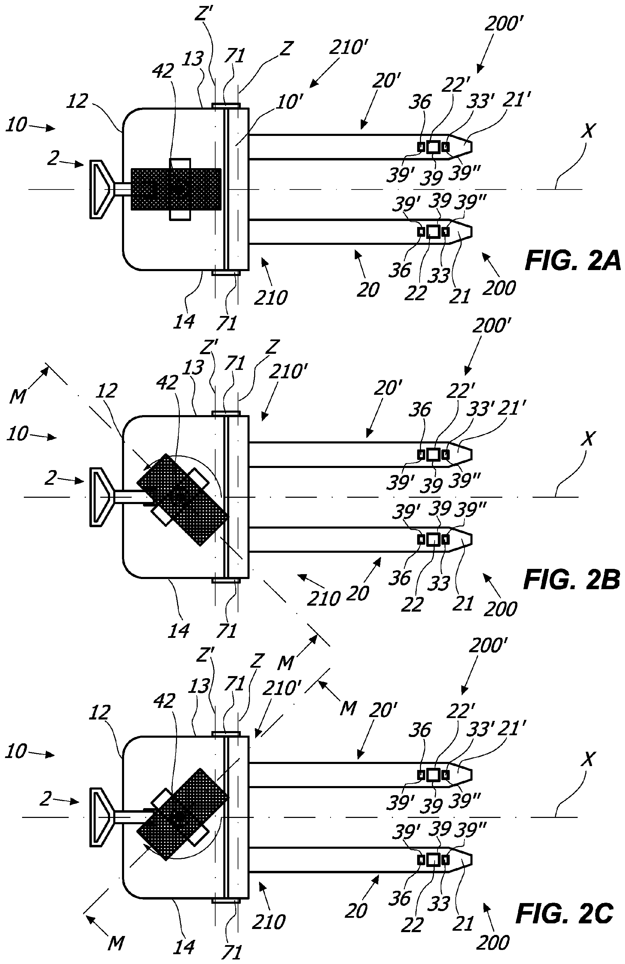

**FIGs. 2A, 2B** and **2C** are top schematic views of the embodiment of the tracked pallet jack **1** of FIG. 1 wherein the track **42** is rotated with various angles around the axis **Y;**
**FIGs. 3** and **4** are schematic side views of the tracked pallet jack **1** respectively on rough and sloped working areas **A**;
**FIG. 5** is a bottom schematic view of the front end portion **200** of a fork **20;**
**FIGs. 6A**, **6B** and **6C** are schematic views of the wheels assembly **30** in different operating steps;

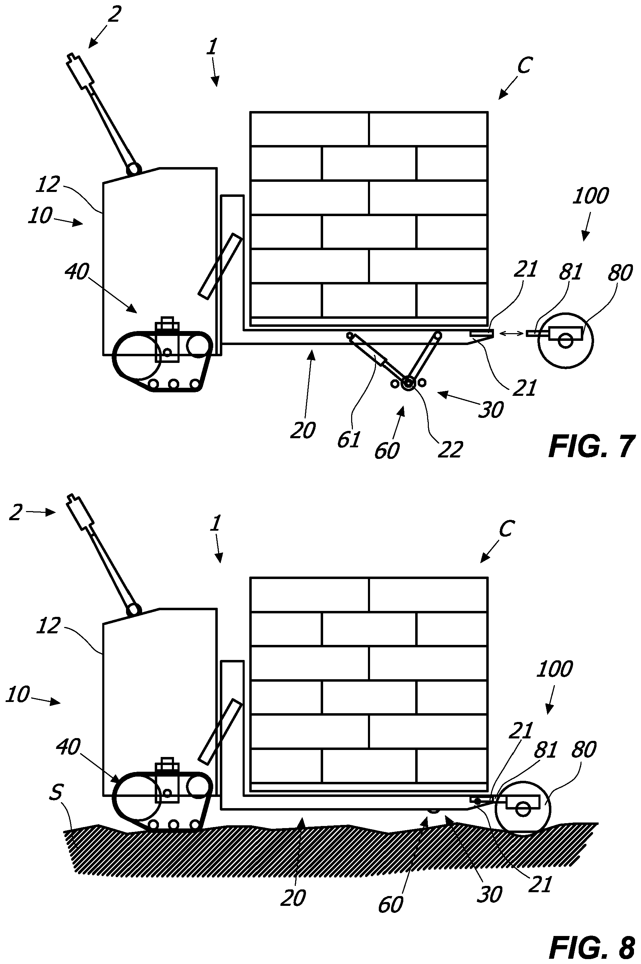

**FIGs. 7** and **8** are side schematic views of the pallet jack **1** with the carriage **100**, respectively during the connection step and when the connection has been accomplished;

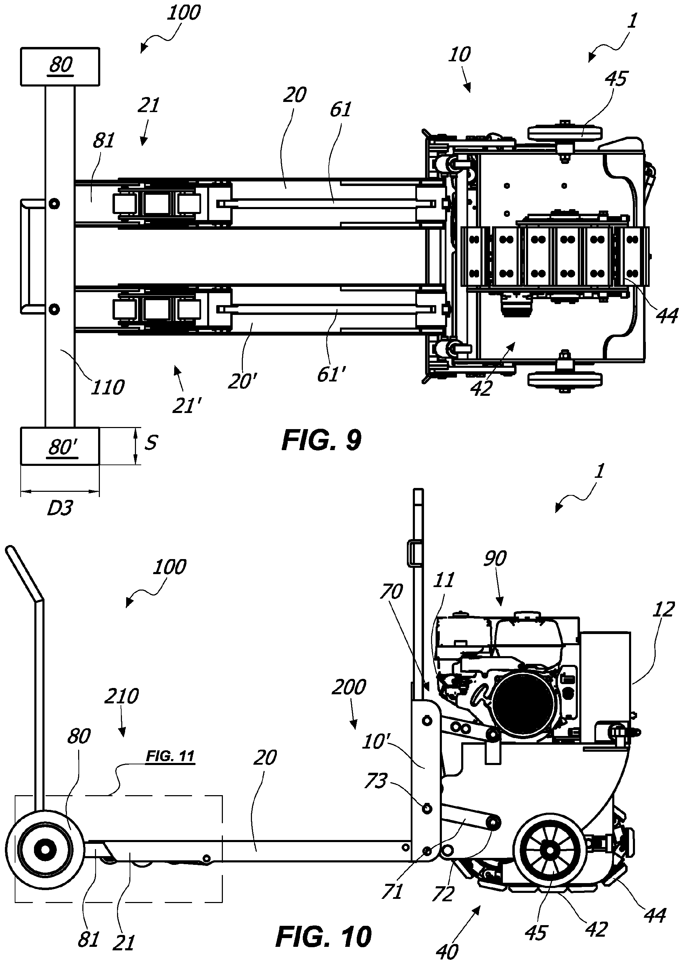

**FIGs. 9** and **10** are respectively bottom and side schematic views of a further embodiment of the pallet jack **1** with the carriage **100**;
**FIG. 11** is a partially sectioned schematic view of some details of FIG. 10.

### Detailed description of some preferred embodiments of the invention

With reference to the above mentioned figures, a tracked pallet jack **1** is described to handle a load **C** on a working area **A.**

The working area **A** may be the ground of a warehouse or a square, or it may be a road, a ground or the like, or it may be a ramp, a lifting platform or the like.

The working area **A** may comprise obstacles **O**, such as small steps or bumps. Possibly, moreover, the working area **A** may be irregular, slightly sloped and / or it may be particularly unstable, as in the case of a grassy, muddy ground, or it may be made of unstable material, such as wood or plastic.

The tracked pallet jack **1** may be handled along a forwarding direction **d** on the working area **A.** The pallet jack **1** may be handled by an operator, possibly on board, by means of suitable control means.

For example, the pallet jack **1** may comprise a manoeuvring handle **2** that may be grasped by the operator whereon controls and buttons may be placed to move the pallet jack **1** or parts thereof as better explained hereinafter. On the other hand, the pallet jack **1** may comprise a pushbutton panel with the control means of a *perse* known type.

Suitably, the pallet jack **1** may comprise a substantially box-like main body **10** and a pair of forks **20**, **20'** extending from a plate-like element **10'** parallel to a first main axis **X.**

The plate-like element **10'** may be faced to the box-like body **10**, and more precisely to the front wall **11** thereof. Preferably, the plate-like element **10'** may be substantially parallel to an axis **Y** substantially perpendicular to the axis **X.**

Suitably, the forks **20**, **20'** may be substantially horizontal, while the plate-like element **10'** may be substantially vertical. The forks **20, 20'** may be of a *per se* known type.

The box-like body **10** may have the front wall **11** faced to the forks **20**, **20'**, a rear wall **12** opposite thereto and a pair of side walls **13**, **14.** In particular, therefore, the box-like body **10** may have a length **LU2** extending between the front wall **11** and the rear wall **12** and a width **LA2** extending perpendicularly to the length **LU2** between the side walls **13**, **14.**

The pallet jack **1** may be motorised, that is, it may comprise motor means **90** such as, for example, an electric and / or endothermic motor of suitable power depending on the needs.

Moreover, the pallet jack **1** may comprise forwarding means **40** along the working area **A.** Suitably, the motor means **90** may be operatively connected to the forwarding means **40** to promote the forwarding of the pallet jack **1** along the forwarding direction **d.**

As shown in the annexed figures, the forwarding means **40** may comprise at least one track **42.**

Thanks to such a feature, the pallet jack **1** may have both a high traction even on rough and / or slippery and / or muddy working areas and a particularly high earth-print, so as to allow the forwarding even on unstable working areas **A.**

The track **42** may have a length **LU1** extending along the axis **X** or parallel thereto and a width **LA1** extending perpendicularly to the length **LU1.** The width **LA1** may be substantially lower than the length **LU1.** In other words, the track **42** may have a substantially rectangular shape at the plan view.

For example, the track **42** may have a length **LU1** of 38 cm to 80 cm, preferably of about 60 cm and a width **LA1** of 15 cm to 25 cm, preferably about 20 cm.

In this way, if the pallet jack **1** loaded with the load **C** has a total mass of 2 tons, the pressure on the ground may be lower than 10 N/cm^2, preferably lower than 8 N/cm^2.

Furthermore, the pallet jack may be particularly low-bulky since the track **42** may not protrude with respect to the width of the box-like body **10.**

More particularly, the track **42** may be interposed between the side walls **13**, **14** and, possibly, also between the walls **11**, **12** of the box-like body **10.**

In other words, the width **LA2** of the track **42** may be lower than the width **LA1** of the box-like body **10.** Preferably, the width **LA2** of the track **42** may be about 30% - 70% of the width **LA1** of the box-like body **10**, and preferably about 40% - 60%.

Suitably, the length **LU1** of the track **42** may be lower, equal or at most slightly greater than the length **LU2** of the substantially box-like main body **10.** For example, the track **42** may have a length greater than the one of the box-like body of about 5 - 15 cm.

Preferably, the track **42** may be placed in a central position with respect to the main body **10**, that is, it may be coaxial with the axis **Y** or, if there are more tracks **42**, it may be symmetrical with respect to the axis **Y** thereof. In particular, the track **42** may be symmetrical with respect to a median plane **M** passing through the axis **Y.**

It is understood that the track **42** may be a single track or a pair of tracks, possibly rigidly coupled together, without departing from the scope of protection of the present invention.

Suitably, the track **42** may rotate. In particular, the track **42** may be rotatably coupled to the main body **10** so as the latter may reciprocally rotate around the axis **Y.**

For example, the track **42** and the main body **10** may be coupled with the interposition of anti-friction means, such as a slewing bearing, so as to support the axial load along the axis **Y** and to allow the simultaneous rotation around the axis **Y** thereof.

For example, the main body **10** and the track **42** may reciprocally rotate from an initial position wherein they are both aligned along the axis **X**, to a position rotated by an angle greater than 90°, preferably greater than 120°, and even more preferably about 135°.

This allows to move the pallet jack **1** on the working area **A** simply and safely, while providing maximum manoeuvrability. Moreover, thanks to the above mentioned features, it is possible to handle the pallet jack **1** on the working area **A** substantially in any direction.

The rotation of the track **42** around the axis **Y** may be accomplished by means of the above mentioned control means. Moreover, such control means may control the activation and the blocking of the track **42** thereof.

According to a particular aspect of the invention, the track **42** may be made of metallic, polymeric material or it may be made with both materials. In particular, the track **42** may comprise a plurality of modules **44** made of polymeric material susceptible to come in contact with the working area **A.**

The forks **20** may comprise idler wheels **22.** In particular, each of the forks **20**, **20'** may comprise a respective idler wheel **22**, **22'.**

Advantageously, the idler wheels **22**, **22'** may be connected with the forks **20**, **20'** by means of suitable hydraulic cylinders **61**, **61'**, that, as better specified hereinafter, define raising means **60** of the front portion **200**, **200'** of the forks **20**, **20'** thereof.

In any case, means may be provided to promote the overcoming of any obstacles **O**, that may be defined by a wheel assembly **30** mounted on each one of the forks **20**, **20'.**

In a preferred but not exclusive embodiment, such a wheel assembly **30** may include, in addition to the idler wheels **22**, **22'**, further idler wheels **33**, **33'** and **36** coupled to the former from opposite sides thereof, so as the former idler wheels **22**, **22'** are interposed between the latter idler wheels **33**, **33'** and **36.**

More particularly, the idler wheels **33**, **33'** and **36** may be rotatably coupled to the respective idler wheels **22**, **22'** by means of a rocker connecting member **31** in correspondence of the rotation hub **37** of the idler wheels **22**, **22'.**

In turn, the idler wheels **33**, **33'** and **36** may be rotatably coupled at the ends **32**, **35** of the rocker connecting member **31** in correspondence of the respective rotation hubs **34**, **34'.**

Consequently, each of the idler wheels **22**, **22'**, **33**, **33'** and **36** may rotate around the respective hubs **37**, **34**, **34'**, and furthermore the idler wheels **33**, **33'** and **36** may integrally oscillate around a hinged point placed in correspondence of the hub **37.**

The wheel assembly **30** described above may be mounted on a support plate **38** that, in turn, is hinged on the forks **20**, **20'** in correspondence of the lower face thereof. Such a support plate **38** may be handled by the hydraulic cylinders **61**, **61'** between a rest position wherein the wheel assembly **30** and the forks **20**, **20'** are reciprocally proximal and a working position wherein the wheel assembly **30** and the forks **20**, **20'** are reciprocally distal.

Depending on the slope of the working area **A**, when the wheel assembly **30** and the forks **20**, **20'** are in the working position, the front portion **200**, **200'** of the forks **20**, **20'** thereof may be sloped, for example raised in the case of working area **A** substantially horizontal, or substantially horizontal, for example in the case of a sloped working area **A.**

Advantageously, when the wheel assembly **30** is in the rest position the idler wheels **22**, **22'**, **33**, **33'** and **36** may be housed in passing-through seats **39**, **39'**, **39"** of the forks **20**, **20'**, with the rocker connecting member **31** being substantially horizontal.

In this way, in the above mentioned rest position each of the idler wheels **22**, **22'**, **33**, **33'** and **36** is free to rotate around the hub **37**, **34**, **34'** thereof but the end idler wheels **33**, **33'** and **36** are blocked in the oscillation thereof around the axis passing through the hub **37**, while in the working position each of the idler wheels **22**, **22'**, **33**, **33'** and **36** is free to rotate around the hub **37**, **34**, **34'** thereof and the end idler wheels **33**, **33'** and **36** are free to oscillate around the axis passing through the hub **37.**

Suitably, the end idler wheels **33**, **33'** and **36** may be identical, in particular with regards to the diameter and possibly the mass thereof. Such end idler wheels **33**, **33'** and **36** may further have a diameter **D1** smaller than the diameter **D2** of the central idler wheels **22**, **22'.**

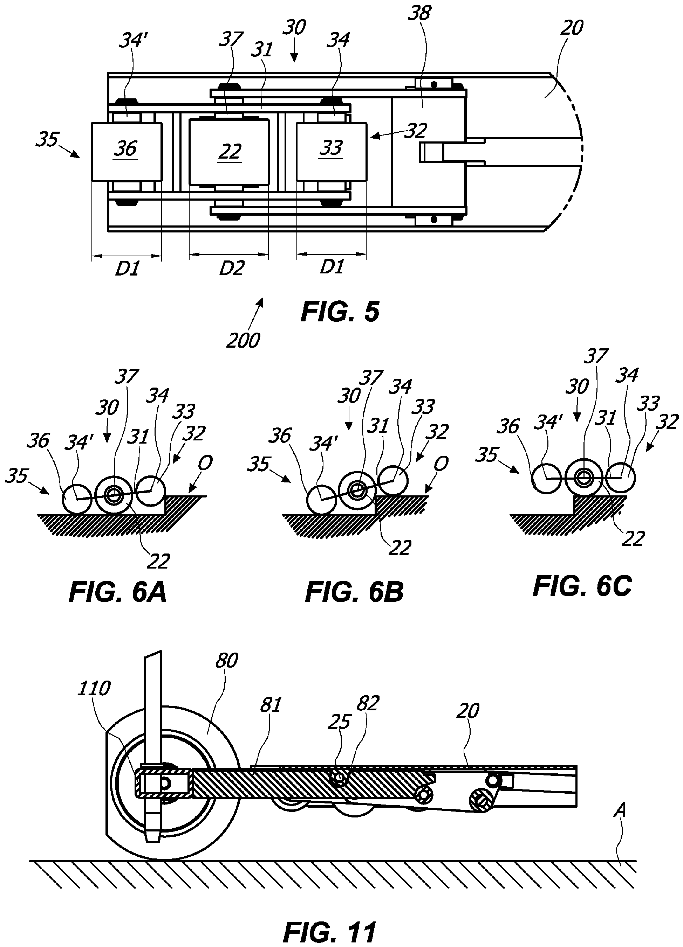

Thanks to such features, in the working position the central idler wheels **22**, **22'** may selectively cooperate with one of the end wheels **33**, **33'** and **36** to overcome any obstacles, as shown in FIGs. 6A to 6C.

On the other hand, in the above mentioned rest position, only the central idler wheels **22**, **22'** may rest on the working area **A**, so that the movement of the pallet jack **1** thereon is not obstructed.

It is understood that not necessarily end wheels may be coupled to the central idler wheels on both sides. It is understood that one or more end wheels may be coupled to the central idler wheels on one side only, without departing from the scope of protection of the appended claims.

However, in the case of the configuration with end wheels on both sides of the central ones shown in the present text, any obstacles **O** may be easily overcome both along the forwarding direction **d** and along the opposite direction.

As above mentioned, the pallet jack **1** may comprise means **60** to raise the front portion **200**, **200'** of the forks **20**, **20'.** In the preferred but not exclusive embodiment shown in the present text, such raising means **60** include the hydraulic cylinders **61**, **61'** acting upon the wheel assembly **30**, as described above.

It is understood that with the term "raising means **60"** it is meant means to promote the reciprocal approaching / removal of the forks **20**, **20'** and of the wheels **22**, **22'.** The latter by suitably acting on the working area **A** promote the raising of the front portion **200**, **200'** of the forks **20**, **20'.**

Moreover, as mentioned above, such raising depends on the slope of the working area, and the above mentioned term refers to a substantially horizontal "standard" working area without thereby excluding the use of the pallet jack on downhill working areas **A**, where the raising may be imperceptible or not completely be accomplished.

Possibly, the raising means **60** may be configured to act independently on the forks **20**, **20'.** In this way, the load **C** may be sloped to the right / left.

Moreover, the pallet jack **1** may comprise means **70** to raise the rear portion **210**, **210'** of the forks **20**, **20'.** More specifically, the means **70** may act upon the rear portion **210**, **210'** of the forks **20**, **20'**, and more precisely on the plate-like element **10'**, to handle it between a lowered position and a raised position.

Suitably, the raising means **60** and **70** may be independent to one another, so as an operator may independently act upon the raising means **60** and on the raising means **70.**

For example, the raising means **60**, **70** may comprise one or more independent hydraulic circuits.

In this way, by selectively acting thereon, it is possible to pivot the forks **20**, **20'** around an axis **Z** substantially perpendicular to the axes **X**, **Y.**

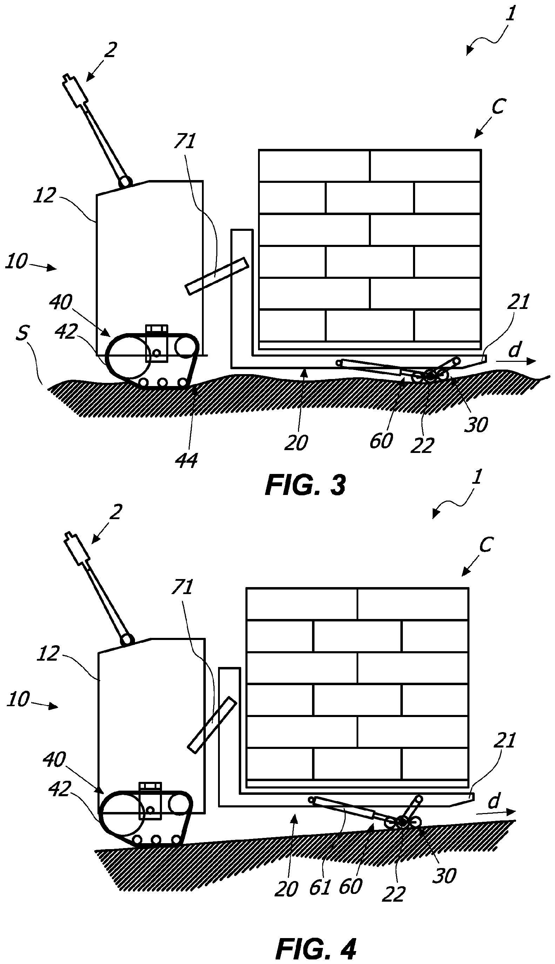

In particular, by suitably acting upon the raising means **60**, **70** it is possible to slope the load **C**, for example to align the forks **20**, **20'** with sloped working areas or working areas with depressions, as shown in FIGs. 3 and 4.

Furthermore, it is understood that by suitably acting on the raising means **60**, **70** it is possible to "classically" raise and lower the load **C** with respect to the working area **A** without sloping it.

In a preferred but not exclusive embodiment, the raising means **70** comprising at least one pair of arms **71** placed on opposite sides of the box-like body **10** having a first end **72** operatively hinged on the side walls **13**, **14** of the box-like body **10** and a second opposite end **73** operatively hinged on the plate-like element **10'.**

Suitably, the arms **71** may unitarily rotate around a fourth axis **Z'** substantially parallel to the axis **Z.**

For safety and anti-overturning reasons, special wheels **45** placed in correspondence of the side walls **13**, **14** of the box-like body **10** may be suitably provided. Such wheels **45** may be suitably placed on the latter to remain raised with respect to the working area **A** during the normal use of the pallet jack **1** and to come in contact therewith in case of the overturning of the pallet jack **1** thereof to the right or to the left.

Possibly, for example in case of muddy or particularly irregular grounds, it is possible to couple to the pallet jack **1** a carriage **100** with idler wheels **80**, **80'** in correspondence of the free end **21**, **21'** thereof.

The idler wheels **80**, **80'** have a diameter **D3** and a thickness **S** greater than the one of the idler wheels **22**, **22'.** Preferably, the diameter **D3** may be at least twice with respect to the **D2** one of the idler wheels **22**, **22'**, and even more preferably at least triple.

Therefore, once the carriage **100** and the pallet jack **1** are reciprocally coupled, the idler wheels **22**, **22'** remain raised from the working area **A**, so as the carriage-pallet jack system moves being pushed by the track **42** and has an earth-print given by the latter and by the wheels **80**, **80'.**

The carriage **100** may comprise a support structure **110** defining an axle whereon the idler wheels **80**, **80'** are mounted and wherefrom a pair of elongated elements **81** extends susceptible to be connected to the forks **20**, **20'**. Moreover, a thrust handle is connected to the support structure **110** to handle the carriage towards the forks **20**, **20'** and therefrom.

As shown in the annexed figures, the elongated elements **81** may be inserted in / disconnected from the forks **20**, **20'** in correspondence of the free ends **21, 21'** thereof.

Moreover, once reciprocally inserted, the male member **25** of the forks **20**, **20'** may be inserted in the female seat **82** of the elongated elements **81**, so as to block the sliding thereof along the axis **X.**

Advantageously, in order to avoid any possible slipping out of the carriage **100** from the pallet jack **1** or vice versa, securing means may be provided substantially acting in the vertical direction.

To the object, the male member **25** of the forks **20**, **20'** may be accessible only when the support plate **38** is in the distal position. In fact, when the latter is in the proximal position, the support plate **38** covers the male member **25** thus preventing the access thereof to the elongated elements **81.**

Therefore, to allow the coupling between the male and female members **25**, **82** it is necessary to insert the elongated elements **81** in the forks **20**, **20'** with the support plate **38** in the distal position.

Then, the support plate **38** thereof passing from the distal to the proximal position comes in contact with the elongated elements **81**, thus blocking the movement thereof in the vertical direction and thus avoiding the accidental uncoupling of the male and female members **25**, **82.**

It is understood that the female and male members may also be inverted, that is, the female member may belong to the forks and the male member may belong to the carriage, as well as they may be of any number, without departing from the scope of protection of the appended claims.

From what has been described above, it is understood that the invention fulfils the intended objects.

The invention is susceptible of numerous modifications and variations, all falling within the inventive concept expressed in the appended claims. All the details may be replaced by other technically equivalent elements, and the materials may be different according to requirements, without departing from the scope of protection of the invention defined by the appended claims.

## Claims

1. A tracked pallet jack to handle a load (**L**) on a working area (**A**), the pallet jack comprising:
- a substantially box-like main body (**10**) having a front wall (**11**), a rear wall (**12**) opposite thereto and a pair of side walls (**13**, **14**);
- at least one pair of forks (**20**, **20**') defining a first longitudinal axis (**X**) operatively connected to said main body (**10**) in correspondence of said front wall (**11**);
wherein said main body (**10**) comprises motor means (**90**) and forwarding means (**40**) of the pallet jack along said working area (**A**), said motor means (**90**) and said forwarding means (**40**) being operatively connected therebetween;
**characterized in that** each of said forks (**20**, **20**') comprises a respective at least one first idler wheel (**22**) and at least one second idler wheel (**22'**) susceptible to rotate on said working area (**A**) upon the forwarding of the pallet jack along said working area (**A**) promoted by said forwarding means (**40**);
wherein said forwarding means (**40**) comprise or consist of at least one track (**42**) rotatably coupled to said main body (**10**) to reciprocally rotate around a second vertical axis (**Y**) substantially perpendicular to said first axis (**X**).

2. Tracked pallet jack according to claim 1, wherein said at least one track (**42**) is interposed between said side walls (**13**, **14**).

3. Tracked pallet jack according to claim 2, wherein said at least one track (**42**) has a substantially rectangular shape at the plan view with a first length (**LU1**) and a first width (**LA1**), the latter being substantially lower than the former, said substantially box-like main body (**10**) having a second length (**LU2**) extending between said front wall (**11**) and said rear wall (**12**) and a second width (**LA2**) extending perpendicularly to said second length (**LU2**) between said side walls (**13**, **14**), said first width (**LA1**) of said at least one track (**42**) being lower than said second width (**LA2**) of said substantially box-like main body (**10**), said first length (**LU1**) of said at least one track (**42**) being preferably lower, equal to or slightly higher than said second length (**LU2**) of said substantially box-like main body (**10**).

4. Tracked pallet jack according to claim 1, 2 or 3, wherein said at least one track (**42**) is symmetrical with respect to a median plane (**M**) passing through said second axis (**Y**), said at least one track (**42**) being a single track or a pair of tracks rigidly coupled therebetween.

5. Tracked pallet jack according to any one of the preceding claims, wherein said at least one track (**42**) comprises a plurality of modules (**44**) susceptible to come in contact with the working area, said modules (**44**) being made of polymeric material, said at least one track (**42**) being preferably entirely made of polymeric material.

6. Tracked pallet jack according to any one of the preceding claims, wherein said forks (**20**, **20'**) have a rear portion (**210**, **210'**) faced to said front wall (**11**) and a front portion (**200**, **200'**) opposite thereto, the pallet jack further comprising first raising means (**70**) of said forks (**20**, **20'**) placed in correspondence of the rear portion (**210**, **210'**) thereof and second raising means (**60**) of said forks (**20**, **20'**) placed in correspondence of the front portion (**200**, **200'**) thereof, said first and second raising means (**70**, **60**) of said forks (**20**, **20'**) being independently controllable one from the other so as by selectively acting thereon it is possible to pivot said forks (**20**, **20'**) around a third axis (**Z**) substantially perpendicular to said first and second axes (**X**, **Y**) passing near the rear portion (**210**, **210'**) of the forks (**20**, **20'**) thereof.

7. Tracked pallet jack according to the previous claim, wherein said at least one first idler wheel and at least one second idler wheel (**22**, **22'**) are placed in correspondence of said front portion (**200**, **200'**) of said forks (**20**, **20'**), said second raising means (**60**) acting upon said at least one first idler wheel and at least one second idler wheel (**22**, **22'**) to handle them between a rest position proximal to said forks (**20**, **20'**) and a working position distal thereto, said forks (**20**, **20'**) extending from a plate-like element (**10'**) substantially parallel to said second axis (**Y**) faced to said front wall (**11**) of said box-like element (**10**), said first raising means (**70**) acting upon said plate-like element (**10'**) to handle it between a lowered position proximal to the working area (**A**) and a raised position distal thereto.

8. Tracked pallet jack according to the preceding claim, wherein said second raising means (**60**) comprise a respective at least one first and at least one second hydraulic plunger (**61**, **61'**) respectively acting upon said at least one first idler wheel and at least one second idler wheel (**22**, **22'**), said first raising means (**70**) comprising at least one pair of arms (**71**) placed on opposite sides of said box-like body (**10**) having a first end (**72**) operatively hinged on the side walls (**13**, **14**) of the latter and a second opposite end (**73**) operatively hinged on said plate-like element (**10'**), said arms (**71**) unitarily rotating around a fourth axis (**Z'**) substantially parallel to said third axis (**Z**) passing through said first end (**72**).

9. Tracked pallet jack according to claim 6, 7 or 8, wherein each of said forks (**20**, **20'**) comprises a respective at least one third idler wheel (**33**, **33'**) operatively connected to a respective at least one first idler wheel (**22**) and at least one second idler wheel (**22'**) to integrally move therewith between said rest and working positions and so as in said working position each of said at least one first and at least one second idler wheel (**22**, **22'**) and the respective at least one third idler wheel (**33**, **33'**) are susceptible to go both in contact with the working area (**A**) to promote the overcoming of possible obstacles, each of said at least one third idler wheel (**33**, **33'**) having a diameter (**D1**) substantially lower than the diameter (**D2**) of said at least one first and at least one second idler wheel (**22**, **22'**) so as in said rest position only the latter rest on the working area (**A**) so as not to impede the movement of the pallet jack (**1**) thereon.

10. Tracked pallet jack according to the preceding claim, wherein each one of said at least one first and second idler wheel (**22**, **22'**) comprises a first rotation hub (**37**), each one of the third idler wheels (**33**, **33'**) comprising a respective second rotation hub (**34**), each one of the third idler wheels (**33**, **33'**) being rotatably coupled to the respective at least one first and one second idler wheel (**22**, **22'**) in correspondence of the first hub (**37**), wherein said forks (**20**, **20'**) and said idler wheels (**22**, **22'**; **33**, **33'**) are reciprocally configured so as in said rest position each third idler wheel (**33**, **33'**) is free to rotate around said second hub (**34**) and to be blocked in the rotation around the axis passing through the first hub (**37**) and so as in said working position each third idler wheel (**33**, **33'**) is free to rotate both around said second hub (**34**) and around the axis passing through the first hub (**37**).

11. Tracked pallet jack according to the preceding claim, wherein each of said forks (**20**, **20'**) comprises a respective fourth idler wheel (**36**) operatively connected to a respective at least one first idler wheel (**22**) and at least one second idler wheel (**22'**) and with a respective at least one third idler wheel (**33**, **33'**) to integrally move therewith between said rest and working positions, each fourth idler wheel (**36**) including a third rotation hub (**34'**) placed on the opposite side with respect to the second rotation hub (**34**) so as the first rotation hub (**37**) remains interposed and at the same distance therefrom, each fourth idler wheel (**36**) and each at least one third idler wheel (**33**, **33'**) being substantially identical.

12. A system to handle a load (**L**) on a working area (**A**), comprising:
- a tracked pallet jack (**1**) according to one or more of the preceding claims;
- a carriage (**100**) having at least one pair of fifth idler wheels (**80**, **80'**) selectively and removably coupled to said forks (**20**, **20'**) in correspondence of the free end (**21**, **21'**) thereof;
wherein said fifth idler wheels (**80**, **80'**) have a diameter (**D3**) and a thickness (**S**) greater than the one (**D2**) of said at least one first and at least one second idler wheel (**22**, **22'**), said carriage and said forks (**20**, **20'**) being reciprocally configured so as once they are coupled thereto said at least one first and at least one second idler wheel (**22**, **22'**) remain raised from the working area (**A**), said fifth idler wheels (**80**, **80'**) being susceptible to rotate on the latter upon the forwarding of the pallet jack along said working area (**A**) promoted by said forwarding means (**40**).

13. System according to the preceding claim, wherein said carriage comprises a support structure (**110**) that includes the fifth idler wheels (**80**, **80'**), said support structure further comprising means (**81**) for the connection with said forks (**20**, **20'**) and a thrust handle to handle the carriage (**100**) towards / from the latter.

14. System according to the preceding claim, wherein said connecting means comprise a pair of elongated elements (**81**) that may be coupled with / uncoupled from said forks (**20**, **20'**), one of each of the latter (**20**, **20'**) and each of said elongated elements (**81**) including at least one male member (**25**), one of each of the latter (**20**, **20'**) and each of said elongated elements (**81**) comprising at least one female member (**82**) reciprocally coupled to said at least one male member (**25**).

15. System according to the preceding claim when it depends on claim 7, wherein said forks (**20**, **20'**) comprise in correspondence of said front portion (**200**, **200'**) a support plate (**38**) of said at least one first idler wheel and at least one second idler wheel (**22**, **22'**) integrally movable with the latter between said distal and proximal positions, said at least one male member (**25**) or female member (**82**) of said forks (**20**, **20'**) being accessible only when said support plate (**38**) is in said distal position, said support plate (**38**) in said proximal position being susceptible to come in contact with said elongated elements (**81**) of said carriage (**100**) to avoid the accidental uncoupling of said at least one male member (**25**) and at least one female member (**82**).

## Patentansprüche

1. Palettenhubwagen mit Raupenantrieb zur Handhabung einer Last (L) auf einer Arbeitsfläche (A), wobei der Palettenhubwagen Folgendes umfasst:
- einen im Wesentlichen kastenförmigen Hauptkörper (10), der eine Frontwand (11), eine dazu entgegensetzte Rückwand (12) und ein Paar Seitenwände (13, 14) aufweist;
- mindestens ein Paar Gabeln (20, 20'), die eine erste Längsachse (X) definieren, die betriebsfähig mit dem Hauptkörper (10) entsprechend der Frontwand (11) verbunden sind;
wobei der Hauptkörper (10) ein Motormittel (90) und ein Beförderungsmittel (40) des Palettenhubwagens entlang der Arbeitsfläche (A) umfasst, wobei das Motormittel (90) und das Beförderungsmittel (40) dazwischen betriebsfähig verbunden sind;
**dadurch gekennzeichnet, dass** jede der Gabeln (20, 20') ein jeweiliges mindestens eines erstes Leitrad (22) und mindestens eines zweites Leitrad (22') umfasst, die beeinflussbar sind, um sich auf der Arbeitsfläche (A) beim Befördern des Palettenhubwagens entlang der Arbeitsfläche (A), der durch das Beförderungsmittel (40) vorangebracht wird, zu drehen;
wobei das Beförderungsmittel (40) mindestens eine Raupe (42) umfasst oder daraus besteht, die drehbar an den Hauptkörper (10) gekoppelt ist, um sich reziprokativ um eine zweite vertikale Achse (Y), die im Wesentlichen senkrecht zur ersten Achse (X) verläuft, zu drehen.

2. Palettenhubwagen mit Raupenantrieb nach Anspruch 1, wobei die mindestens eine Raupe (42) zwischen den Seitenwänden (13, 14) eingefügt ist.

3. Palettenhubwagen mit Raupenantrieb nach Anspruch 2, wobei die mindestens eine Raupe (42) eine im Wesentlichen rechteckige Form im Grundriss mit einer ersten Länge (LU1) und einer ersten Breite (LA1) aufweist, wobei letztere im Wesentlichen geringer als erstere ist, wobei der im Wesentlichen kastenförmige Hauptkörper (10) eine zweite Länge (LU2), die sich zwischen der Frontwand (11) und der Rückwand (12) erstreckt, und eine zweite Breite (LA2), die sich senkrecht zur zweiten Länge (LU2) zwischen den Seitenwänden (13, 14) erstreckt, aufweist, wobei die erste Breite (LA1) der mindestens einen Raupe (42) geringer ist als die zweite Breite (LA2) des im Wesentlichen kastenförmigen Hauptkörpers (10), wobei die erste Länge (LU1) der mindestens einen Raupe (42) vorzugsweise geringer, gleich oder etwas größer als die zweite Länge (LU2) des im Wesentlichen kastenförmigen Hauptkörpers (10) ist.

4. Palettenhubwagen mit Raupenantrieb nach Anspruch 1, 2 oder 3, wobei die mindestens eine Raupe (42) in Bezug auf die durch die zweite Achse (Y) verlaufende Medianebene (M) symmetrisch ist, wobei die mindestens eine Raupe (42) eine Einzelraupe oder ein Paar Raupen, die starr dazwischen gekoppelt sind, ist.

5. Palettenhubwagen mit Raupenantrieb nach einem der vorhergehenden Ansprüche, wobei die mindestens eine Raupe (42) eine Vielzahl von Modulen (44) umfasst, die beeinflussbar sind, mit der Arbeitsfläche in Kontakt zu gelangen, wobei die Module (44) aus Polymermaterial hergestellt sind und die mindestens eine Raupe (42) vorzugsweise vollständig aus Polymermaterial hergestellt ist.

6. Palettenhubwagen mit Raupenantrieb nach einem der vorhergehenden Ansprüche, wobei die Gabeln (20, 20') einen hinteren Abschnitt (210, 210'), der zur Frontwand (11) weist, und einen vorderen Abschnitt (200, 200'), der dazu entgegengesetzt ist, aufweisen, wobei der Palettenhubwagen ferner ein erstes Hebemittel (70) der Gabeln (20, 20'), das entsprechend dem hinteren Abschnitt (210, 210') davon platziert ist, und ein zweites Hebemittel (60) der Gabeln (20, 20'), das entsprechend dem vorderen Abschnitt (200, 200') davon platziert ist, umfassen, wobei das erste und das zweite Hebemittel (70, 60) der Gabeln (20, 20') unabhängig voneinander gesteuert werden können, so dass durch ihr selektives Bedienen ermöglicht wird, dass die Gabeln (20,20') um eine dritte Achse (Z) schwenken, die im Wesentlichen senkrecht zur ersten und zweiten Achse (X, Y) und in der Nähe des hinteren Abschnitts (210, 210') der Gabeln (20, 20') verläuft.

7. Palettenhubwagen mit Raupenantrieb nach dem vorhergehenden Anspruch, wobei das mindestens eine erste Leitrad und das mindestens eine zweite Leitrad (22, 22') entsprechend dem vorderen Abschnitt (200, 200') der Gabeln (20, 20') platziert sind, das zweite Hebemittel (60) auf das mindestes eine erste Leitrad und mindestens eine zweite Leitrad (22, 22') reagiert, um sie zwischen einer Ruheposition proximal zu den Gabeln (20, 20') und einer Arbeitsposition distal dazu zu bedienen, wobei sich die Gabeln (20, 20') von einem plattenförmigen Element (10') im Wesentlichen parallel zu der zweiten Achse (Y) erstrecken, welche zur Frontwand (11) des kastenartigen Elements (10) weist, wobei das erste Hebemittel (70) auf das plattenartige Element (10') einwirkt, um es zwischen einer abgesenkten Position proximal zur Arbeitsfläche (A) und einer angehobene Position distal dazu zu bedienen.

8. Palettenhubwagen mit Raupenantrieb nach dem vorhergehenden Anspruch, wobei das zweite Hebemittel (60) einen jeweiligen mindestens einen ersten und mindestens einen zweiten Hydraulikkolben (61, 61') umfasst, die jeweils auf das mindestens eine erste Leitrad und mindestens eine zweite Leitrad (22, 22') einwirken, wobei das erste Hebemittel (70) mindestens ein Paar Arme (71) umfasst, die auf gegenüberliegenden Seiten des kastenförmigen Körpers (10) angeordnet sind und ein erstes Ende (72), das betriebsmäßig an den Seitenwänden (13, 14) des letzteren angelenkt ist, und ein zweites gegenüberliegendes Ende (73) aufweisen, das betriebsmäßig an dem plattenförmigen Element (10') angelenkt ist, wobei sich die Arme (71) einheitlich um eine vierte Achse (Z') drehen, die im Wesentlichen parallel zur durch das erste Ende (72) durchlaufenden dritten Achse (Z) verläuft.

9. Palettenhubwagen mit Raupenantrieb nach Anspruch 6, 7 oder 8, wobei jede der Gabeln (20, 20') ein jeweiliges mindestens eines drittes Leitrad (33, 33') umfasst, das betriebsmäßig mit einem jeweiligen mindestens einem ersten Leitrad (22) und mindestens einem zweiten Leitrad (22') verbunden ist, um sich mit diesen ganzheitlich zwischen der Ruhe- und Arbeitsposition zu bewegen, und so dass in der Arbeitsposition jeweils das mindestens eine erste und mindestens eine zweite Leitrad (22, 22') und das jeweilige mindestens eine dritte Leitrad (33, 33') beeinflusst werden können, dass beide in Kontakt mit der Arbeitsfläche (A) gelangen, um die Überwindung möglicher Hindernisse zu fördern, wobei jedes des mindestens einen dritten Leitrads (33, 33') einen Durchmesser (D1) aufweist, der wesentlich kleiner als der Durchmesser (D2) des mindestens einen ersten und mindestens einen zweiten Leitrads (22, 22') ist, so dass in der Ruheposition nur letzteres auf der Arbeitsfläche (A) liegt, um die Bewegung des Palettenhubwagens (1) darauf nicht zu behindern.

10. Palettenhubwagen mit Raupenantrieb nach dem vorhergehenden Anspruch, wobei jedes des mindestens einen ersten und zweiten Leitrads (22, 22') jeweils eine erste Rotationsnabe (37) umfasst, jedes der dritten Leiträder (33, 33') eine jeweilige zweite Rotationsnabe (34) umfasst, wobei jedes der dritten Leiträder (33, 33') drehbar mit dem jeweiligen mindestens einen ersten und einen zweiten Leitrad (22, 22') in Übereinstimmung mit der ersten Nabe (37) gekoppelt ist, wobei die Gabeln (20, 20') und die Leiträder (22, 22'; 33, 33') reziprok so konfiguriert sind, dass das dritte Leitrad (33, 33') in der Ruheposition sich frei um die zweite Nabe (34) dreht und in der Drehung um die Achse, die durch die erste Nabe (37) verläuft, blockiert wird und sich jedes dritte Laufrad (33, 33') in der Arbeitsposition frei um die zweite Nabe (34) und um die durch die erste Nabe (37) verlaufende Achse dreht.

11. Palettenhubwagen mit Raupenantrieb nach dem vorhergehenden Anspruch, wobei jede der Gabeln (20, 20') ein jeweiliges viertes Leitrad (36) umfasst, das betriebsmäßig mit einem jeweiligen mindestens einen ersten Leitrad (22) und mindestens einen zweiten Leitrad (22') und mit jeweils einem mindestens einen dritten Leitrad (33, 33') verbunden ist, um sich damit jeweils zwischen der Ruhe- und Arbeitsposition zu bewegen, wobei jedes vierte Leitrad (36) eine dritte Rotationsnabe (34') aufweist, die auf der gegenüberliegenden Seite in Bezug auf die zweite Rotationsnabe (34) angeordnet ist, so dass die erste Rotationsnabe (37) zwischengeschaltet und im gleichen Abstand davon bleibt, wobei jedes vierte Leitrad (36) und jedes mindestens eine dritte Leitrad (33, 33') im Wesentlichen identisch sind.

12. System zur Handhabung einer Last (L) auf einer Arbeitsfläche (A), umfassend:
- einen Palettenhubwagen mit Raupenantrieb (1) nach einem oder mehreren der vorhergehenden Ansprüche;
- einen Schlitten (100) mit mindestens einem Paar fünfter Leiträder (80, 80'), die selektiv und entfernbar mit den Gabeln (20, 20') entsprechend ihrem freien Ende (21, 21') gekoppelt sind;
wobei die fünften Leiträder (80, 80') einen Durchmesser (D3) und eine Dicke (S) aufweisen, die größer als der (D2) des mindestens einen ersten und mindestens einen zweiten Leitrads (22, 22') ist, wobei der Schlitten und die Gabeln (20, 20') reziprokativ konfiguriert sind, so dass, sobald sie damit verbunden sind, mindestens ein erstes und mindestens ein zweites Leitrad (22, 22') von der Arbeitsfläche (A) angehoben bleiben, wobei die fünften Leiträder (80, 80') beeinflussbar sind, sich auf letzterer beim Befördern des Palettenhubwagens entlang der Arbeitsfläche (A) zu drehen, der durch das Beförderungsmittel (40) unterstützt wird.

13. System nach dem vorhergehenden Anspruch, wobei der Schlitten eine Stützstruktur (110) umfasst, die die fünften Leiträder (80, 80') aufweist, wobei die Stützstruktur ferner ein Mittel (81) für die Verbindung mit den Gabeln (20, 20') und einen Schubhebel umfasst, um den Schlitten (100) zu diesem hin/von diesem weg zu bewegen.

14. System nach dem vorhergehenden Anspruch, wobei das Verbindungsmittel ein Paar länglicher Elemente (81) umfasst, die mit den Gabeln (20, 20') gekoppelt/von diesen entkoppelt sein können, wobei jeweils eine der letzteren (20, 20') und jedes der länglichen Elemente (81) mindestens ein männliches Element (25) umfassen, eine von jeder der letzteren (20, 20') und jedes der länglichen Elemente (81) mindestens ein weibliches Element (82) umfassen, das reziprokativ mit dem mindestens einen männlichen Element (25) gekoppelt ist.

15. System nach dem vorhergehenden Anspruch, wenn von Anspruch 7 abhängig, wobei die Gabeln (20, 20') entsprechend dem vorderen Abschnitt (200, 200') eine Trägerplatte (38) des mindestens einen ersten Leitrads und mindestens einen zweiten Leitrads (22, 22') umfassen, das einstückig beweglich mit letzterem zwischen der distalen und der proximalen Position ist, wobei das mindestens eine männliche Element (25) oder weibliche Element (82) der Gabeln (20, 20') nur zugänglich ist, wenn sich die Trägerplatte (38) in der distalen Position befindet, wobei die Trägerplatte (38) in der proximalen Position beeinflussbar ist, mit den länglichen Elementen (81) des Schlittens (100) in Kontakt zu gelangen, um das versehentliche Entkoppeln des mindestens einen männlichen Elements (25) und mindestens einen weiblichen Elements (82) zu vermeiden.

## Revendications

1. Transpalette chenillé permettant de manipuler une charge (L) sur une zone de travail (A), le transpalette comprenant :
- un corps principal sensiblement en forme de boîte (10) comprenant une paroi avant (11), une paroi arrière (12) opposée à celle-ci et une paire de parois latérales (13,14) ;
- au moins une paire de fourches (20, 20') définissant un premier axe longitudinal (X) connectées de manière opérationnelle audit corps principal (10) en correspondance avec ladite paroi avant (11) ;
dans lequel ledit corps principal (10) comprend des moyens moteurs (90) et des moyens de déplacement (40) du transpalette le long de ladite zone de travail (A), lesdits moyens moteurs (90) et lesdits moyens de déplacement (40) étant connectés de manière opérationnelle entre eux ;
**caractérisé en ce que** chacune desdites fourches (20, 20') comprend au moins une première roue libre (22) et au moins une deuxième roue libre (22') respectives susceptibles de tourner sur ladite zone de travail (A) lors du déplacement du transpalette le long de ladite zone de travail (A) favorisé par lesdits moyens de déplacement (40) ;
dans lequel lesdits moyens de déplacement (40) comprennent ou se composent d'au moins une chenille (42) couplée de façon rotative audit corps principal (10) pour tourner de manière réciproque autour d'un deuxième axe vertical (Y) sensiblement perpendiculaire audit premier axe (X).

2. Transpalette chenillé selon la revendication 1, dans lequel ladite au moins une chenille (42) est interposée entre lesdites parois latérales (13, 14).

3. Transpalette chenillé selon la revendication 2, dans lequel ladite au moins une chenille (42) présente une forme sensiblement rectangulaire selon la vue en plan avec une première longueur (LU1) et une première largeur (LA1), cette dernière étant sensiblement inférieure à la première, ledit corps principal sensiblement en forme de boîte (10) comportant une deuxième longueur (LU2) s'étendant entre ladite paroi avant (11) et ladite paroi arrière (12) et une deuxième largeur (LA2) s'étendant perpendiculairement jusqu'à ladite deuxième longueur (LU2) entre lesdites parois latérales (13, 14), ladite première largeur (LA1) de ladite au moins une chenille (42) étant inférieure à ladite deuxième largeur (LA2) dudit corps principal sensiblement en forme de boîte (10), ladite première longueur (LU1) de ladite au moins une chenille (42) étant préférablement inférieure, égale ou légèrement supérieure à ladite deuxième longueur (LU2) dudit corps principal sensiblement en forme de boîte (10).

4. Transpalette chenillé selon la revendication 1, 2 ou 3, dans lequel ladite au moins une chenille (42) est symétrique par rapport à un plan médian (M) traversant ledit deuxième axe (Y), ladite au moins une chenille (42) étant une seule chenille ou une paire de chenilles couplées rigidement entre elles.

5. Transpalette chenillé selon l'une quelconque des revendications précédentes, dans lequel ladite au moins une chenille (42) comprend une pluralité de modules (44) susceptibles d'entrer en contact avec la zone de travail, lesdits modules (44) étant en matériau polymère, ladite au moins une chenille (42) étant de préférence entièrement en matériau polymère.

6. Transpalette chenillé selon l'une quelconque des revendications précédentes, dans lequel lesdites fourches (20, 20') comprennent une partie arrière (210, 210') faisant face à ladite paroi avant (11) et une partie avant (200, 200') opposée à celle-ci, le transpalette comprenant en outre des premiers moyens d'élévation (70) desdites fourches (20, 20') placés en correspondance avec la partie arrière (210, 210') de celles-ci et des deuxièmes moyens d'élévation (60) desdites fourches (20, 20') placés en correspondance avec la partie avant (200, 200') de celles-ci, lesdits premiers et deuxièmes moyens d'élévation (70, 60) desdites fourches (20, 20') pouvant être contrôlés indépendamment les uns des autres de sorte qu'en agissant sélectivement sur ceux-ci, il est possible de faire pivoter lesdites fourches (20, 20') autour d'un troisième axe (Z) sensiblement perpendiculaire auxdits premier et deuxième axes (X, Y) passant près de la partie arrière (210, 210') des fourches (20, 20') de ceux-ci.

7. Transpalette chenillé selon la revendication précédente, dans lequel lesdites au moins une première roue libre et au moins une deuxième roue libre (22, 22') sont placées en correspondance avec ladite partie avant (200, 200') desdites fourches (20, 20'), lesdits deuxièmes moyens d'élévation (60) agissant sur lesdites au moins une première roue libre et au moins une deuxième roue libre (22, 22') pour les manipuler entre une position de repos proximale auxdites fourches (20, 20') et une position de travail distale à celles-ci, lesdites fourches (20, 20') s'étendant à partir d'un élément en forme de plaque (10') sensiblement parallèle audit deuxième axe (Y) faisant face à ladite paroi avant (11) dudit élément en forme de boîte (10), lesdits premiers moyens d'élévation (70) agissant sur ledit élément en forme de plaque (10') pour le manipuler entre une position abaissée proximale à la zone de travail (A) et une position élevée distale à celle-ci.

8. Transpalette chenillé selon la revendication précédente, dans lequel lesdits deuxièmes moyens d'élévation (60) comprennent au moins un premier et au moins un deuxième piston hydraulique (61, 61') respectifs agissant respectivement sur lesdites au moins une première roue libre et au moins une deuxième roue libre (22, 22'), lesdits premiers moyens d'élévation (70) comprenant au moins une paire de bras (71) placés sur des côtés opposés dudit corps en forme de boîte (10) comprenant une première extrémité (72) articulée de manière opérationnelle sur les parois latérales (13, 14) de cette dernière et une deuxième extrémité opposée (73) articulée de manière opérationnelle sur ledit élément en forme de plaque (10'), lesdits bras (71) tournant unitairement autour d'un quatrième axe (Z') sensiblement parallèle audit troisième axe (Z) traversant ladite première extrémité (72).

9. Transpalette chenillé selon la revendication 6, 7 ou 8, dans lequel chacune desdites fourches (20, 20') comprend au moins une troisième roue libre (33, 33') respective connectée de manière opérationnelle à au moins une première roue libre (22) et au moins une deuxième roue libre (22') respectives de façon à se déplacer d'un seul tenant avec celles-ci entre lesdites positions de repos et de travail, et de sorte que dans ladite position de travail, chacune desdites au moins une première et au moins une deuxième roues libres (22, 22') et l'au moins une troisième roue libre (33, 33') respective sont susceptibles d'entrer toutes deux en contact avec la zone de travail (A) pour favoriser le dépassement de possibles obstacles, chacune desdites au moins une troisième roue libre (33, 33') comportant un diamètre (D1) sensiblement inférieur au diamètre (D2) desdites au moins une première et au moins une deuxième roues libres (22, 22') de sorte que, dans ladite position de repos seulement, cette dernière se repose sur la zone de travail (A) de façon à ne pas empêcher le mouvement du transpalette (1) sur celle-ci.

10. Transpalette chenillé selon la revendication précédente, dans lequel chacune desdites au moins une première et une deuxième roues libres (22, 22') comprend un premier moyeu de rotation (37), chacune des troisièmes roues libres (33, 33') comprenant un deuxième moyeu de rotation (34) respectif, chacune des troisièmes roues libres (33, 33') étant couplées de manière rotative aux au moins une première et une deuxième roues libres (22, 22') respectives en correspondance avec le premier moyeu (37), dans lequel lesdites fourches (20, 20') et lesdites roues libres (22, 22' ; 33, 33') sont configurées réciproquement de sorte que dans ladite position de repos, chaque troisième roue libre (33, 33') est libre de tourner autour du deuxième moyeu (34) et d'être bloquée dans la rotation autour de l'axe traversant le premier moyeu (37), et de sorte que dans ladite position de travail, chaque troisième roue libre (33, 33') est libre de tourner à la fois autour dudit deuxième moyeu (34) et autour de l'axe traversant le premier moyeu (37).

11. Transpalette chenillé selon la revendication précédente, dans lequel chacune desdites fourches (20, 20') comprend une quatrième roue libre (36) respective connectée de manière opérationnelle aux au moins une première roue libre (22) et au moins une deuxième roue libre (22') respectives et avec au moins une troisième roue libre (33, 33') respective de façon à se déplacer d'un seul tenant avec celles-ci entre lesdites positions de repos et de travail, chaque quatrième roue libre (36) comprenant un troisième moyeu de rotation (34') placé sur le côté opposé par rapport au deuxième moyeu de rotation (34) de sorte que le premier moyeu de rotation (37) reste interposé et à la même distance de celui-ci, chaque quatrième roue libre (36) et chaque au moins une troisième roue libre (33, 33') étant sensiblement identiques.

12. Système permettant de manipuler une charge (L) sur une zone de travail (A), comprenant :
- un transpalette chenillé (1) selon une ou plusieurs des revendications précédentes ;
- un chariot (100) comprenant au moins une paire de cinquièmes roues libres (80, 80') couplées de manière sélective et amovible auxdites fourches (20, 20') en correspondance avec l'extrémité libre (21, 21') de celles-ci ;
dans lequel lesdites cinquièmes roues libres (80, 80') comportent un diamètre (D3) et une épaisseur (S) supérieurs à celui (D2) desdites au moins une première et au moins une deuxième roues libres (22, 22'), ledit chariot et lesdites fourches (20, 20') étant configurés réciproquement de sorte qu'une fois qu'ils y sont couplés, lesdites au moins une première et au moins une deuxième roues libres (22, 22') restent élevées par rapport à la zone de travail (A), lesdites cinquièmes roues libres (80, 80') étant susceptibles de tourner sur cette dernière lors du déplacement du transpalette le long de ladite zone de travail (A) favorisé par lesdits moyens de déplacement (40).

13. Système selon la revendication précédente, dans lequel ledit chariot comprend une structure de support (110) comprenant les cinquièmes roues libres (80, 80'), ladite structure de support comprenant en outre des moyens (81) pour la connexion auxdites fourches (20, 20') et une poignée de poussée permettant de manœuvrer le chariot (100) vers/à partir de ces dernières.

14. Système selon la revendication précédente, dans lequel lesdits moyens de connexion comprennent une paire d'éléments allongés (81) qui peuvent être couplés avec lesdites fourches/désaccouplés desdites fourches (20, 20'), une de chacune de ces dernières (20, 20') et chacun desdits éléments allongés (81) comprenant au moins un élément mâle (25), une de chacune de ces dernières (20, 20') et chacun desdits éléments allongés (81) comprenant au moins un élément femelle (82) couplée réciproquement audit au moins un élément mâle (25).

15. Système selon la revendication précédente lorsqu'elle dépend de la revendication 7, dans lequel lesdites fourches (20, 20') comprennent en correspondance avec ladite partie avant (200, 200') une plaque de support (38) desdites au moins une première roue libre et au moins une deuxième roue libre (22, 22') pouvant se déplacer d'un seul tenant avec celles-ci entre lesdites positions distale et proximale, lesdits au moins un élément mâle (25) ou élément femelle (82) desdites fourches (20, 20') étant accessibles seulement lorsque ladite plaque de support (38) se trouve dans ladite position distale, ladite plaque de support (38) dans ladite position proximale étant susceptible d'entrer en contact avec lesdits éléments allongés (81) dudit chariot (100) pour éviter le désaccouplement accidentel desdits au moins un élément mâle (25) et au moins un élément femelle (82).
